# EUROPÄISCHE PATENTSCHRIFT

(11) **EP 0 739 491 B1**
(45) Veröffentlichungstag und Bekanntmachung des Hinweises auf die Patenterteilung: **12.04.2006**
(21) Anmeldenummer: 94919550.7
(22) Anmeldetag: 20.06.1994
(51) Int. Cl.: G01S 5/00, G01S 5/14, H04Q 7/20

(54) **SYSTEM ZUM HERBEIHOLEN VON HILFE FÜR PERSONEN ODER INSASSEN VON FAHRZEUGEN, DIE EIN MOBILTELEFON MIT SICH FÜHREN**
SYSTEM FOR SUMMONING HELP FOR VEHICLE OCCUPANTS OR OTHER PEOPLE CARRYING A MOBILE TELEPHONE
SYSTEME PERMETTANT DE FAIRE PARVENIR DE L'AIDE A DES PERSONNES OU A DES OCCUPANTS D'UN VEHICULE QUI DISPOSENT D'UN TELEPHONE MOBILE

(30) Priorität: 21.06.1993 DE 4320543; 11.03.1994 DE 4408332
(43) Veröffentlichungstag der Anmeldung: 30.10.1996
(73) Patentinhaber: van Buren, Elke, 90480 Nürnberg (DE)
(72) Erfinder: van Buren, Elke, 90480 Nürnberg (DE)
(74) Vertreter: Grüter, Klaus Peter
(86) Internationale Anmeldenummer: PCT/DE1994/000698
(87) Internationale Veröffentlichungsnummer: WO 1995/000860

(56) Entgegenhaltungen:
- EP-A- 0 467 651
- DE-A- 4 220 963
- US-A- 4 833 477
- US-A- 5 218 367
- RESEARCH DISCLOSURE, Bd.339, Nr.31, Juli 1992, HAVANT GB Seiten 540 - 541 'Vehicle Distress System'

## Beschreibung

Die Erfindung betrifft insbesondere ein System zum Herbeiholen von Hilfe für Personen oder Insassen von Fahrzeugen nach dem Oberbegriff des Patentanspruchs 1.

In zunehmendem Maße werden Kraft- und sonstige Fahrzeuge mit Einrichtungen zur Erhöhung der aktiven und passiven Sicherheit der Fahrzeuginsassen ausgestattet Zu solchen Einrichtungen zählen beispielsweise der Airbag, der Gurtstraffer usw., die durch am Fahrzeug befindliche Verzögerungsmeßeinrichtungen betätigt werden. Zur Erhöhung der passiven Sicherheit werden in jüngerer Zeit verstärkt Maßnahmen ergriffen, um die Fahrgastzelle mechanisch robuster zu gestalten, wie durch Querverstrebungen in den Fahrzeugtüren-usw., zur Erhöhung des Seitenaufprallschutzes.

Diese Maßnahmen erhöhen die Sicherheit bei schweren Unfällen erheblich. Von besonderer Bedeutung ist aber auch, daß ärztliche Hilfe schnell an den Unfallort gelangt. Hierbei verstreicht oft wertvolle Zeit.

Aus der DE-A-42 20 963 ist ein Navigationssystem für Kraftfahrzeuge bekannt, bei dem die in einem FIFO-Speicher gespeicherten Informationen sowie die in einem Sprachrecorder aufgezeichneten und in einer ID-Karteneinheit gespeicherten Informationen in einem Notfall von einer Kommunikationseinheit zusammen mit Fahrzeugpositionsdaten ausgesandtwerden. Die ID-Karteneinheit dient zum Speichern von persönlichen Informationen, wie Adresse, Name, Geschlecht, Erfahrung im Fahren von Fahrzeugen und andere Informationen des Fahrers sowie Name, Adresse oder andere Informationen von begleitenden Passagieren.

Aufgabe der vorliegenden Erfindung ist es, ein System anzugeben, das eine schnelle Hilfe ermöglicht.

Diese Aufgabe wird durch die Merkmale des unabhängigen Patentanspruchs 1 gelöst. Vorteilhafte Ausgestaltungen der Erfindung sind in den. Unteransprüchen angegeben.

Erfindungsgemäß wird das in zunehmendem Maße in Fahrzeugen befindliche bzw. von Personen mitgeführte Mobiltelefon zum Herbeiholen von Hilfe genutzt. Dazu ist vorgesehen, im Fahrzeug eine Elektronik - Komponente bzw. Betätigungseinrichtung vorzusehen, die mit dem Mobiltelefon in Verbindung steht und im Fahrzeug und/oder am bzw. im Mobiltelefon angeordnet ist. Diese kann beispielsweise manuell von einem Fahrzeuginsassen oder einem Helfer im Unfallfahrzeug oder vorzugsweise an seinem eigenen Mobiltelefon, z. B. durch Knopfdruck, betätigt werden. Ebenso ist es zweckmäßig diese Komponente durch Sensoren zu betätigen, die am Fahrzeug angebracht sind und eine Beschädigung des Fahrzeugs erkennen. Dies hat den Vorteil, daß die Elektronik - Komponente auch dann betätigt wird, wenn die Fahrzeuginsassen ohnmächtig sind und ein Helfer nicht zur Verfügung steht bzw. nicht an das Mobittelefon gelangt.

Die entsprechend angesteuerte Elektronik - Komponente, Notrufauslöse. Einrichtung bzw. Notrufauslöse-Elektronik veranlaßt das Mobiltelefon im Fahrzeug zur Aussendung eines Notsignals, das von einer Mobilfunk - Betriebseinrichtung empfangen, ausgewertet und an einen Hilfs- oder Rettungsdienst weitergeleitet wird. Eine solche Einrichtung ist die übliche Sende-/Empfangseinrichtung des Mobilfunknetzes (wie z.B. ein terrestrisches C-, D-, E-, GSM-Netz oder ein Satellit.) mit der das Mobiltelefon auch sonst kommuniziert.

Die nachfolgend verwendeten Begriffe "Notsignal", Notfallnachricht", im Notfall übertragenen Daten" und "Notfallmeldung" stellen dieselben Daten dar.

Es wird also insbesondere ein Hilfs- oder Rettungssystem für Insassen von Fahrzeugen vorgeschlagen, die ein Mobiltelefon aufweisen. Das Fahrzeug weist eine Notrufauslöse-Elektronik auf, die das Mobiltelefon beim Erkennen eines vorbestimmten Auslösesignals derart in Gang setzt, daß das Mobiltelefon ein Notsignal aussendet, das von einer mit dieser in Verbindung stehenden Mobilfunk - Betriebseinrichtung empfangen und an einen Hilfs - oder Rettungsdienst weitergeleitet wird.

Erfindungsgemäß wird das Notsignal mit einer Information über den Ort des Unfalls versehen. Für die Generierung und Speicherung eines entsprechenden Signals kann bspw. eine entsprechende weitere Elektronik Komponente oder auch der integrierte Schaltkreis einer Chipkarte verwendet werden, die heute üblicherweise zum Betrieb von Mobiltelefonen verwendet wird. Dies kann z.B. dann zweckmäßig sein, wenn die vom Satellitenempfänger, einem Kompaß oder einem Antiblockiersystem abgegebenen Daten zur Ermittlung des aktuellen Orts des Fahrzeugs nicht unmittelbar von dem mobiltelefon und/oder Mobilfunkbetriebseinrichtung verarbeitet bzw. ausgesandt werden können. Hierzu kann bspw. die Chipkarte, das Mobiltelefon oder die weitere Elektronik-Komponente mit einem entsprechenden Programm und/oder spezifischen Hardware - Komponenten, wie einem Digital-/Analog-wandler versehen werden.

Insbesondere wird vorgeschlagen, daß das Mobiltelefon eine IC-Karte aufweist, die das Notsignal generiert und/oder ein Notsignal oder Teile davon speichert, wobei eine Verzögerungserfassungs- und/ oder Ortsinformationseinrichtung und/oder die Meßelemente mit der IC-Karte in Verbindung stehen und Teile des Notsignals modifizieren. Die Notrufaustöse-Elektronik kann insbesondere durch die IC-Karte gebildet und manuell durch einen Schalter von einem Fahrzeug-Insassen oder Helfer betätigt werden. Insbesondere kann es von Vorteil sein, wenn die Elektronik erst dann in Gang gesetzt wird, wenn zusätzlich ein Verzögerungserfassungs- und/oder ein Beschädigungssensor einen Unfall registriert.

Die Information über den Ort des Unfalls kann bspw. anhand eines Navigationsempfängers gewonnen werden, wie er bereits preisgünstig für Sportboote usw. erhältlich ist. Eine andere Möglichkeit besteht darin, ein im Fahrzeug befindliches Verkehrsleitsystem zu benutzen, wie es bereits in der Erprobung ist. Eine weitere Möglichkeit besteht dann, den Ort des Mobiltelefons, das das Notsignal aussendet, anhand einer Peilung durch die in der Nähe befindlichen Funkstellen des Mobilfunknetzes zu ermitteln, was nicht Gegenstand der Ansprüche ist. Ferner kann die Ortsinformation von Sende-/Empfangseinrichtungen gellefert werden, die zur Erhebung einer Straßenbenutzungsgebühr mit dem die entsprechende Straße benutzenden Fahrzeug kommunizieren, was nicht Gegenstand der Anspruche ist. Ferner kann vorgesehen werden, daß der Satellitenempfänger, der die Ortsdaten anzeigt bzw. entsprechende Daten zur Verfügung stellt zur Kalibrierung bzw. Eichung Orts-, Zeit- oder Frequenzdaten der Satelliten des Global Position System (GPS), eines Zeit- und/oder Frequenznormals (z.B. eines DCF 77 - Senders), einer Mobilfunkbetriebseinrichtung oder eines Systems zur Erhebung von Straßenbenutzungsgebühren empfängt, die diese zur Verarbeitung durch das erfindungsgemäße System aussenden.

Von Vorteil kann es ferner sein das Notsignal so zu gestalten, daß erkenntlich ist, wie schwer der Unfall ist. So kann auch bspw. ein Schwellwertschalter vorgesehen werden, der die Auslösung des Notsignals verhindert, wenn es sich um einen geringfügigen Unfall handelt. Das Auslösen des Notsignals kann ferner davon abhängig gemacht werden, ob ein Gurtstraffer oder Airbag beim Unfall betätigt worden ist, wobei dann deren Sensor verwendet werden kann. Von Vorteil ist es jedoch auch, wenn im Bereich der Fahrgastzelle Sensoren angebracht werden, die deren Verformung erkennen lassen, da diese einen unmittelbareren Aufschluß über den Zustand des Fahrzeugs und damit der Insassen ermöglichen. Bei diesen Sensoren kann es sich um Dehnungsmeßstreifen oder dergleichen handeln.

Ferner kann es zweckmäßig sein, das Notsignal mit einer information zu versehen, die Aufschluß darüber gibt, wieviele Personen im Unfall - Fahrzeug sind. Dazu können bspw. entsprechende Meßelemente im Bereich der Fahrzeugsitze angeordnet werden, die mit der Einrichtung zur Erzeugung des Notsignals in Verbindung stehen. Ebenso kann ein Notsignal verhindert werden, wenn sich keine Person im Fahrzeug befindet. Bei diesen Meßelementen kann es sich bspw.um Druckschalter im Bereich der Fahrzeugsitze oder um Sensoren handeln, die die Benutzung der Sicherheitsgurte des Fahrzeugs registrieren.

Außerdem kann das Notsignal mit weiteren Informationen versehen werden, wie der Blutgruppe, akuten Krankheiten, das Tragen eines Herzschrittmachers usw. Solche Informationen können bspw. in der persönlichen Chipkarte des Mobittelefonbenutzers gespeichert werden. Die Übertragung weiterer Informationen wird sich insbesondere daran orientieren, ob deren Kenntnis für eine optimale und schnelle ärztliche Versorgung sinnvoll ist.

Nach einer weiteren vorteilhaften Ausgestaltung der Erfindung ist vorgesehen, daß das Notsignal eine Information über die Identität des Benutzers des Mobiltelefons und/oder eine information über die Kenndaten des Unfallfahrzeugs, wie z.B amtliches Kennzeichen, Fahrzeugtyp und Farbe usw., aufweist. Durch die Kenntnis dieser Informationen wird den Hilfs- bzw. Rettungskräften die Arbeit erleichtert.

Die Kenndaten des Fahrzeugs können beispielsweise in einer dem Fahrzeug zugeordneten Notrufauslöse-Elektronik gespeichert werden und die dem Benutzer des Mobiltelefons zugeordneten Informationen in dessen persönlicher IC-Karte, die beim Betrieb des Mobiltelefons in dieses eingeschoben wird. Dann stehen, z.B. in einem Mietfahrzeug, stets die Kenndaten des Fahrzeugs bei einem Unfall oder Notfall zur Verfügung. Der Mieter des Mitfahrzeugs schiebt seine IC-Karte vor der Inbetriebnahme des Mobiltelefons in dieses ein und dann stehen sowohl die Fahrzeug-, als auch die benutzerbezogenen Daten bei einem Unfall oder Notfall zur Übermittlung an einen Hilfs- oder Rettungsdienst zur Verfügung. Selbstverständlich können in der IC-Karte auch die Daten des Fahrzeugs eingespeichert werden, das der Karteninhaber üblicherweise benutzt. Dann kann, wenn dies zweckmäßig ist, auf eine entsprechende Speichereinrichtung im privaten Fahrzeug verzichtet werden. Die IC-Karte des Karten-inhabers oder die Notrufauslöse-Elektronik weist zumindest eine Information über die Identität des Karteninhabers auf die im Fall eines Überfalls übertragen wird, um den Hilfs- oder Rettungskräften die Arbeit zu erleichtern.

Ferner kann vorgesehen werden, daß das Mobiltelefon mit einer IC-Karte versehen ist, die das Notsignal modifiziert und/oder ein Notsignal oder Teie davon speichert. Ferner kann die Notrufauslöse-Elektronik zumindest teilweise durch die IC-Karte gebildet sein.

Ebenso kann es zweckmäßig sein, daß die Notrufauslöse-Elektronik nicht nur durch Beschädigungs- oder Verzögerungssensoren am Fahrzeug oder am Mobiltelefon betätigbar ist, sondern auch oder nur manuell durch Betätigung eines Schalters von einem Fahrzeuginsassen oder Helfer. Es kann zudem vorgesehen sein, daß die Notrufauslöse-Elektronik erst dann manuell in Gang gesetzt werden kann, wenn ein Verzögerungserfassungs- und/oder Beschädigungssensor einen Unfall registriert.

Außerdem kann vorgesehen werden, daß die IC-Karte das Notrufsignal generiert und/oder verschlüsselt, wobei eine Verzögerungserfassungs- und/oder eine Ortsinformationseinrichtung und/oder die Meßelemente und Sensoren, die mit der IC-Karte in Verbindung stehen das Notsignal modifizieren.

Zunächst wird ein sehr einfaches System beschrieben.

Ein Fahrzeug oder eine Person führt ein Mobiltelefon mit sich. Will der Benutzer des Mobiltelefons oder die Notrufauslöse-Elektronik eine Telefonverbindung mit der Polizei, Feuerwehr oder einem Rettungsdienst etc. herstellen, so wird in der Regel eine Verbindung mit der in bezug auf den Standort des Fahrzeugs nächstgelegenen Dienststelle gewünscht, damit schnell Hilfe erfolgen kann. Hierzu ist es jedoch notwendig, daß zunächst die Vorwahl des Orts (Ortsnetzkennzahl) angewählt wird, in dem sich das Fahrzeug oder die Person derzeit befindet, bevor z.B. eine bundeseinheitliche Notrufnummer angewählt wird. Die richtige Vorwahl wird der Benutzer in der Regel nicht kennen, insbesondere dann wenn er sich nicht in seinem Wohnort aufhält. Um möglichst schnell eine Verbindung zur nächstgelegenen Dienststelle herzustellen, ist es zweckmäßig, wenn das Mobilfunknetz der gewählten Notrufnummer, wie die Nummer 110, 112 usw., die Vorwahl der Stadt bzw. des Orts zuordnet, an dem sich die lokale Mobilfunk-Betriebseinrichtung befindet, die die Notrufnummer empfängt.

Da die jeweilige lokale Mobilfunk-Betriebseinrichtung üblicherweise die jeweils in ihrer Reichweite befindlichen, eingeschalteten Mobiltelefone registriert, besteht eine Alternative darin, daß die lokale Mobilfunk-Betriebseinrichtung an diese Mobiltelefone die jeweilige, lokale Vorwahl überträgt. Diese kann dann im Moblitelefon, in der IC-Karte oder anderenorts abgespeichert werden. Wählt der Benutzer oder die Notrufauslöse-Elektronik eine Notrufnummer, so kann dieser die aktuelle, lokale Vorwahl automatisch vom Mobiltelefon und/oder der Notrufauslöse-Elektronik bzw. IC-Karte vorangestellt werden. Ebenso kann die lokale Mobilfunk-Betriebseinrichtung den Mobiltelefonen eine sie identifizierende Kennung übermitteln, anhand der die aktuelle, lokale Vorwahl, die im Mobiltelefon etc. neben anderen Vorwahlnummern gespeichert ist, zugeordnet wird.

Es ist offensichtlich, daß die Ausführungen auch für ein Mobiltelefon gelten, mit dem der Benutzer umhertäuft.

Die Erfindung wird nachfolgend an Hand eines Ausführungsbeispiels näher beschrieben.

Der Kerngedanke der Erfindung besteht darin, die heute bereits üblichen Mobiltelefone zum Herbeirufen von Hilfe, wie Unfallhilfe, Pannenhilfe oder Hilfe zum Auffinden eines gestohlenen Fahrzeugs oder Mobiltelefons, zu benutzen. Insbesondere zum Auffinden eines gestohlenen Fahrzeugs oder Mobiltelefons kann es zweckmäßig sein, daß die Mobilfunkbetriebseinrichtung-möglichst so, daß der unbefugte Benutzer dies nicht bernerkt - das Mobiltelefon zur Aussendung der Ortsdaten veranlaßt oder eine Peilung vomimmt, was nicht Gegenstand des Ansprüche ist. Ebenso kann am Fahrzeug ein Sensor vorgesehen sein, der die unbefugte Benutzung des Fahrzeugs registriert und das Mobiltelefon zur Aussendung einer entsprechenden Nachricht -ggf, unter Hinzufügung der Ortsdaten - veranlaßt.

Nachfolgend wird davon ausgegangen, daß sich die Unfall - Opfer in einem Pkw befinden, der ein betriebsbereites Mobiltelefon aufweist. Um die Betriebsbereitschaft des Mobiftelefons möglichst auch im Fall eines Unfalls sicherzustellen, ist es vorteilhaft, wenn das Mobiltelefon einen von der Fahrzeugbatterie unabhängigen Akkumulator aufweist und/oder wenn die Sende-/Empfangseinrichtung des Mobiltelefons an einem wenig gefährdeten Platz im Fahrzeug angeordnet ist, wie z.B. auf dem Kardantunnel oder unter der Rücksitzbank. Selbstverständlich gelten die Ausführungen auch für andere Fahrzeuge, wie Lastkraftwagen, Schiffe, Flugzeuge usw.

Es kann von Vorteil sein, wenn das dem Fahrzeug zugeordnete Mobiltelefon eine Speichereinrichtung aufweist, in der die fahrzeugbezogenen Daten, wie amtliches Kennzeichen, Typ und Farbe sowie ggf. die Art und Menge gefährlicher Güter usw. für eine entsprechende Modifizierung des Notsignals abgespeichert sind.

Dem autorisierten Benutzer eines Mobilfunknetzes ist üblicherweise eine entsprechende IC-Karte zugeordnet, die den Betrieb von Mobiltelefonen gestattet und eine den Karteninhaber identifizierende Information aufweist. Diese Information wird benutzt, um Aufschluß darüber zu erhalten, von wem Hilfe herbeigerufen wird. Vorteilhaft kann es sein, wenn der integrierte Schaltkreis der IC-Karte mit einer ersten Speichereinrichtung versehen ist, in der die im Fall eines Unfalls zu übertragenden personenbezogenen Daten der betroffenen Person bzw. der betroffenen Personen eingespeichert sind. In einer einfachen Ausführungsform der Erfindung kann es sich beispielsweise bei diesen Daten auch nur um die Anzahl der im Fahrzeug befindlichen Personen handeln, die bspw. vom Fahrer vor Antritt einer Fahrt eingegeben wird. Wird das Fahrzeug für längere Zeit abgestellt, so kann die eingespeicherte Anzahl der Fahrzeuginsassen auch automatisch auf Null gesetzt werden. Ebenso kann die Anzahl der im Fahrzeug befindlichen Personen anhand der benutzten Sicherheitsgurte mit entsprechenden Sensoren erfaßt und an die Notrutauslöst-Elektronik übertragen werden.

Bei der ersten Speichereinrichtung für die im Fall eines Unfalls zu übertragenden personenbezogenen Daten, kann bspw. ein EE-PROM-Speicher benutzt werden, der Daten permanent speichert, jedoch überschreibbar ist. Um einen unbefugten Zugriff auf die personenbezogenen Daten zu verhindern, kann die IC-Karte derart gestaltet sein, daß sie eine Änderung oder ein Lesen der Daten nur nach einer Autorisierungsprüfung gestattet. Im Fall eines Unfalls können die zu übertragenden Daten in verschlüsselter Form ausgegeben werden.

Nachdem es zu einem Pkw - Unfall gekommen ist, wird dies von Beschädigungs- und/oder Verzögerungssensoren am Pkw und/oder am Mobiltelefon registriert. Ein solcher Sensor kann bspw. derjenige Sensor sein, der einen ebenfalls Im Fahrzeug befindlichen Airbag oder Gurtstraffer auslöst. Ebenso kann es sich um einen Dehnungsmeßstreifen handeln, der im Bereich der Fahrgastzelle angeordnet ist und deren Beschädigung registriert. In welcher Form der Sensor ausgebildet ist, ist jedoch von sekundärer Bedeutung, sofern er einen Unfall zuverlässig registriert.

Das von dem Sensor abgegebene Signal gelangt zweckmäßigerweise zunächst an einen Schwellwertschalter, dessen Schwellwert so eingestellt ist, daß bei dessen Überschreitung von einer ernstlichen Verletzung der Fahrzeuginsassen auszugehen ist. Die Höhe des Schwellwerts kann sich bspw. am Fahrzeugtyp orientieren, d.h. bei einem Fahrzeug mit geringer passiver Sicherheit für die Fahrzeuginsassen, wird der der Schweilwert niedriger sein, als bei einem Fahrzeug mit größerer passiver Sicherheit. Handelt es sich bei dem verwendeten Sensor um einen Sensor, der erst oberhalb eines bestimmten Werts anspricht, so kann selbstverständlich auch auf einen Schwellwertschalter verzichtet werden. Ebenso kann es zweckmäßig sein, die Auslösung einer nachfolgend beschriebenen Notrufauslöse - Elektronik oberhalb eines ersten, niedrigeren Werts in das Ermessen der Fahrzeuginsassen zu stellen und bei Erreichen eines zweiten, höheren Werts für eine automatische Auslösung zu sorgen.

Es kann zweckmäßig sein, daß die Norufauslöse - Elektronik kontinuierlich, während des Betriebs des Fahrzeugs, Daten speichert, die charakteristisch für den Ort des Fahrzeugs sind. So können diese Daten bspw. in einem überschreibbaren Speicher , wie z.B. ein EE-PROM, kontinuierlich gespeichert und nach einer vorbestimmten Zeit oder Anzahl von Daten der Reihe nach durch Überschreiben aktualisiert werden, wobei zweckmäßigerweise die ältesten Daten mit neuesten Daten nach Art eines Schieberegisters überschrieben werden. Diese Daten können bspw. von einem ebenfalls im Fahrzeug befindlichen Navigations - empfänger bereitgestellt und an die Auslöseelektronik übertragen werden. Ein derartiger Navigationsempfänger kann bspw. ein Verkehrsleitsystem und/oder ein heute bereits erhäftlicher Satellitenempfänger sein. Ebenso kann es das Ausgangssignal eines geeigneten Kompasses oder eines ABS-Systems des Fahrzeugs sein, um zusammen mit dem Satellitenempfänger eine höhere Genauigkeit der Ortsangabe zu ermöglichen.

Ebenso kann es zweckmäßig sein, Daten in der Notrufauslöse - Elektronik zu speichern, die charakteristisch für den oder die Fahrzeuginsassen sind, wie die Blutgruppe, beachtenswerte Vorerkrankungen oder die Bereitschaft zur Organspende. Dabei wird es sich um solche Daten handeln, die für die ärztliche Versorgung im Falle eines Unfalls von Bedeutung sind und bspw. in Notfall- Ausweisen dokumentiert werden. Dazu kann bspw. auf Daten zurückgegriffen werden, die in einer IC - Karte der betreffenden Person gespeichert sind. Bei dieser IC - Karte kann es sich bspw. um eine Krankenversicherungskarte handeln, in der ein Arzt Befunde des zugehörigen Patienten notiert. Diese kann ggf. vor Antritt der Fahrt, bzw. der Benutzung des Mobiltelefons, in eine entsprechende Leseeinrichtung des Mobiltelefons eingeschoben werden oder ihre Daten können ganz oder teilweise in der IC - Karte zum Betrieb des Mobiltelefons gespeichert werden.

Das Unfall - Signal des Sensors aktiviert die Notrufauslöse - Elektronik, woraufhin diese das Mobiltelefon In Gang setzt, ggf. eine Notruf - Nummer anwählt, die Daten über den Ort des Unfalls, dessen Schwere, die Anzahl der im Fahrzeug befindlichen Personen und deren Charakteristika an die mit dem Moblitelefon in Verbindung stehende Mobilfunk - Betriebseinrichtung oder einen Teil dieser Informationen überträgt. Diese leitet die Daten dann an einen Rettungsdienst weiter. Dieser wertet die Daten aus und teilt der in Bezug auf das Unfallfahrzeug nächstgelegenen Rettungsstelle den Ort, die Straße, den Kilometerstein etc. und die personen- bzw. fahrzeugbezogenen Daten mit. Die Alarmierung der nächstgelegenen Rettungsstelle kann jedoch auch unmittelbar von dem Unfallfahrzeug aus erfolgen, wenn im Fahrzeug eine entsprechende Einrichtung und die Vorwahl der nächstgelegen Rettungsstelle vorhanden ist. Dabei kann das Signal eines der vorgenannten Sensoren am Fahrzeug als Maß für die Schwere des Unfalls dienen. Die Anzahl der im Fahrzeug befindlichen Personen kann bspw. anhand von Sensoren festgestellt werden, die sich an den Sitzen des Fahrzeugs befinden und ihr Meßsignal an die Notrufauslöse - Elektronik übertragen.

Eine oder mehrere Notrufnummem können in der Notrufauslöse-Elektronik und/oder der persönlichen IC-Karte für die Benutzung von Mobiltelefonen abgespeichert sein.

Gemäß einer Ausführungsform der Erfindung handelt es sich bei den Daten über den Ort des Unfalls, um die von dem Navigationsempfänger bereitgestellte Ortsinformation. Der Rettungsdienst wertet diese Daten mit einer entsprechenden Datenverarbeitungseinrichtung aus. Anhand der Auswertung der Daten steht dem Rettungsdienst eine Ortsangabe zur Verfügung, wie entsprechende Stadt, Straße und Kilometerstein o. ä., die es den Rettungsdiensten ermöglicht, den Unfallort aufzusuchen. Diese Information wird zweckmäßigerweise an die dem Unfallort nächstgelegene Rettungsstation weitergegeben.

Nach einer anderen Ausführungsform der Erfindung ist die Datenverarbeitungseinrichtung bereits im Fahrzeug oder im Mobiltelefon vorgesehen. Die Datenverarbeitungseinrichtung wertet die von einem Satellitenempfänger bereitgestellte Ortsinformation - wie bei der vorgenannten Ausführungsform - aus, indem sie der von dem Satellitenempfänger bereitgestellten Ortsinformation eine gespeicherte, entsprechende Ortsangabe, wie Stadt, Straße und Kilometerstein etc. zuordnet.

Bei dieser Datenverarbeitungseinrichtung kann es sich um ein Navigations- bzw. Verkehrsteitsystem handeln, das dem Fahrer als Navigationshilfe dient. Das Verkehrsleitsystem kann bereits einen Satellitenempfänger, wie z.B. einen GPS-Empfänger, aufweisen und gibt dem Fahrer die exakte Position des Fahrzeugs, z.B. mittels einer Landkarte auf einem Bildschirm, an. Ermöglicht ein wie auch immer geartetes Leitsystem die Bestimmung der Position des Fahrzeugs und einer entsprechenden Ortsangabe, wie Stadt, Straße und Kilometerstein o. ä., so kann die dem Unfallort nächstgelegene mit ihrer Rufnummer abgespeicherte Rettungsstation vom erfindungsgemäßen Unfall-Rettungssystem direkt vom Unfallfahrzeug aus telefonisch benachrichtigt werden. Es kann zweckmäßig sein, das die Notrufauslöse-Elektronik die zu übertragenden Daten in einer dem Menschen verständlichen Sprache speichert und an die Rettungsstation weitergibt, indem bei einem Unfall ein auf einem Tonband oder Halbleiterspeicher gespeicherter Text und die aktuelle Position des Unfallfahrzeugs übermittelt wird. Ebenso kann es sinnvoll sein, daß die den Notruf empfangende Stelle eine Telefonverbindung mit dem betreffenden Fahrzeug herstellt, um Einzelheiten von und/oder über die Situation der Insassen zu erfahren. Die Quittierung des Empfangs des Notrufs - zur Beruhigung der betroffenen Personen - ist ebenso zweckmäßig. Zudem kann das Mikrofon im Fahrzeug bzw. am Mobiltelefon von der den Notruf empfangenden Stelle eingeschaltet werden, um näheres in Erfahrung zu bringen.

Es versteht sich, das die vorgenannten Daten, mit Ausnahme der Daten die von Sensoren am Fahrzeug gewonnen werden, auch auf Knopfdruck von einer Person, die z.B. wegen eines Raubüberfalls Hilfe braucht, übertragen werden können, die mit einem Mobiltelefon, das die Notrufauslöse - Einrichtung und einen Ortsdaten abgebenden Navigations- bzw. Satellitenempfänger aufweist, umherfäuft.

Es kann besonders zweckmäßig sein, wenn die Notrufauslöse - Elektronik durch die heute bereits in Mobiltelefonen befindliche IC- Karte gebildet wird. Deren Soft- oder Hardware wird dann so modifiziert, daß sie das Notrufsignal generiert und/ oder modifiziert und die zu übertragenden Daten zumindest zum Teil speichert. Die Signale der Sensoren am Fahrzeug und/oder des Navigationsempfängers können an die entsprechend modifizierte IC - Karte über eine entsprechend erweiterte Verbindungsstelle zwischen Mobiltelefon und Fahrzeug übertragen werden.

Unabhängig davon, ob die Notrufauslöse - Elektronik durch eine IC - Karte oder eine anderweitige Elektronik gebildet wird, kann es sinnvoll sein In diese die in einem Notfall zu übertragenden Daten, z.B. mittels einer Tastatur oder einem Mikrofon vorher einzugeben, wobei es sich auch um die Tastatur des Mobiltelefons handeln kann. Das Programm, das die relevanten Daten abfragt, wäre dann entsprechend zu modifizieren.

Insbesondere zur Beruhigung der Insassen kann es sinnvoll sein, wenn der Rettungsdienst den Empfang des Notrufs entweder durch einen Anruf im Unfallfahrzeug oder durch ein Quittungssignal bestätigt. Das Quittungssignal des Rettungsdienstes kann ebenso wie eine Bestätigung für das Aussenden des Notrufs in der Notrufauslöse-Elektronik oder der IC-Karte des Mobiltelefons, ggf. unlöschbar, gespeichert werden.

Ebenso kann es sinnvoll sein, die Notrufauslöse-Elektronik und/oder den integrierten Schaltkreis der IC-Karte mit einer reversibel betätigbaren Sperreinrichtung zu versehen, bei der die Sperreinrichtung die Aussendung eines Notsignals verhindert. Dies kann beispielsweise sinnvoll sein, wenn nur einem beschränkten Personenkreis die Benutzung des Systems ermöglicht werden soll, wie z.B. im Rahmen eines Testbetriebs. Dann können beispielsweise alle an die Kunden des Mobilfunknetzes ausgegebenen Notrufauslöse-Elektroniken und/oder IC-Karten mit der erforderlichen Soft- bzw. Hardware versehen werden, die für die Aussendung eines Notrufsignals notwendig ist. Nach und nach können diese dann für die Benutzung des erfindungsgemäßen Systems und für bestimmte Hilfs-Dienste freigegeben werden. Es versteht sich, daß die Sperreinrichtung an einer beliebigen Stelle im erfindungsgemäßen System vorgesehen werden kann. Insbesondere kann es zweckmäßig sein die Sperr- bzw. Freischalteinrichtung in der Datenverarbeitungseinrichtung des Systems bzw. des jeweiligen Hilfs - Diensts anzuordenen, die bspw. über jeweils eine Telefonnummer benachrichtigt werden können, um eine Freischaltung für den jeweiligen Dienst erreichen zu können, ohne daß es der Vortage der IC-Karte bei einer autorisierten Stelle durch den Kunden bedarf.

Eine reversibel betätigbare Sperreinrichtung kann beispielsweise darin bestehen, daß ein bestimmtes Flag bzw. Bit des Halbteiterspeichers der Notrufausiöse-Elektronik und/oder des integrierten Schattkreises der IC-Karte gesetzt wird. Eine autorisierte Stelle oder Person gibt hierzu bspw. einen Code ein, der mit einem vorbestimmten, nicht extern lesbaren und in der Notrufauslöse-Elektronik und/oder dem integrierten Schaltkreis der IC-Karte vorab gespeicherten Code verglichen wird. Stimmen beide Codes überein, so kann das bestimmte Flag oder Bit gesetzt bzw. zurückgesetzt werden.

Ebenso ist das Vorhandensein einer in der IC-Karte und/oder in der Notrufauslöse-Elektronik gespeicherten Information, die optional im Fall eines Not- oder Unfalls mit übertragen und von der empfangenden Stelle ausgewertet wird, die Zugangsvoraussetzung für die Benutzung des Systems, wie insbesondere des Unfall - Rettungssystems.

Es versteht sich femer, daß auf einen Navigationsempfänger etc. und die Übermittlung von dessen Ortsinformation verzichtet werden kann, wenn die Mobilfunk-Betriebseinrichtung in der Lage ist, den Ort des Mobiltelefons mit hinreichender Genauigkeit, aufgrund des Kommunikationssignals des Mobiltelefons, zu bestimmen, was nicht Gegenstand des Ansprüche ist. Dies könnte insbesondere bei einer engmaschigen Zellular-Mobilfunk-Betriebseinrichtung der Fall sein (wie z.B. beim E-Netz) oder einer geeigneten Anordnung von Kommunikationssatelliten und ggf. einer zusätzlichen Peilung.

Die Ausführungen machen deutlich, daß die Erfindung Benutzern von Mobiltelefonen ein effektives System - wie insbesondere ein Unfall - Rettungssystem - zur Verfügung stellt, wobei es nur eines geringen zusätzlichen Aufwands bedarf. Ebenso ermöglicht die Erfindung auch andere nützliche Systeme, die dem Benutzer des Mobiltelefons dann schnell und effektiv helfen können, wenn ihnen die Position des Benutzers oder Fahrzeugs übermittelt wird. Dies ist z.B. bei einem System zum Auffinden gestohlener Fahrzeuge, Mobiltelefone der Fall. Ferner wird die Akzeptanz zur Verwendung von Mobiltelefonen erhöht.

Bevorzugte Ausführungsformen der Erfindung werden nachfolgend anhand Zeichnungen erläutert.
- Figur 1: zeigt eine erfindungsgemäße Rettungseinrichtung für Personen mit einem Mobiltelefon, das mit einem Satellitenempfänger zur Ermittlung des Aufenthattsorts in Verbindung steht.
- Figur 2: zeigt eine Anordnung gemäß der Erfindung in einem Auto.
- Figur 3: zeigt eine Anordnung gemäß der Erfindung bei der die Bestimmung des Orts des Mobittetefons durch eine oder mehrere Empfangsantennen eines Zellular-Netzes erfolgt, was nicht Gegenstand des Ansprüche ist.
- Figur 4: zeigt eine Anordnung gemäß Figur 3 bei der die Empfangsantennen auf einem oder mehreren Sateliten angeordnet sind, was nicht Gegenstand des Ansprüche ist.

Gerät eine Person 1 in eine Notsituation, wie z.B. ein Raubüberfall etc., so betätigt sie das erfindungsgemäß gestaltete Mobittelefon 2a. Dieses sendet eine Notfalimeidung aus, die insbesondere eine information über den Ort des Notfalls aufweist. Der Ort des Unfalls wird mittels eines GPS- bzw. einer Differential-GPS-Emptfangseinrichtung 2b bestimmt und bildet einen Teil der Notfalimeldung des Mobiltelefons. Die Empfangsantenne des Satellitenempfängers befindet sich im oder am bzw. im Bereich des Mobiltelefon bzw. wird durch eine geeignete Antenne des Mobiltelefons gebildet.

Eine Antenne 3 der Mobilfunkbetriebseinrichtung empfängt die Notfallmeldung. Beim vorliegenden Ausführungsbeispiel handelt es sich um eine terrestrische Antenne (zellulares Mobilfunknetz). Es versteht sich jedoch, daß es sich auch um eine Antenne an einem Satelliten handeln kann (Satelliten-Mobiltelefon). Ein Wandler 4 wandelt die von der Antenne an eine Datenverarbeitungseinrichtung abgegebene Notfallmeldung in eine für die Datenverarbeitungseinrichtung adäquate Form um und diese verarbeitet die empfangene Notrufmeldung. Dabei verarbeitet die Datenverarbeitungseinrichtung zweckmäßigerweise auch kartographische Daten mittels geeigneter Software, die in einem Datenspeicher 6 gespeichert sind. Die Datenverarbeitungseinrichtung überträgt das Verarbeitungsergebnis an eine Anzeigeeinrichtung 7, die den Notfallort auf einer Karte anzeigt. Eine Aufsichtsperson (nicht dargestellt) nimmt über das Mobiltelefon Kontakt mit der in Not befindlichen Person auf und teilt ihr mit, daß Hilfe kommt. Ober das Mikrofon des Mobiltelefons kann die Situation der betroffenen Person erkundet werden. Ferner kann ermittelt werden, welche Art von Rettungsfahrzeug nötig ist, wie ein Polizeifahrzeug, ein Krankenwagen oder ein Rettungshubschrauber. Welche Art von Rettungsfahrzeug notwendig ist kann auch anhand der Art der ausgelösten Notfallmeldung bestimmt werden. Es kann jedoch auch oder nur ein Qittungssignal von dem Rettungsdienst ausgesandt werden, um der Person am Mobilfunkgerät visuell oder akustisch mitzuteilen, daß die Notfallmeldung empfangen worden ist.

Zweckmäßig ist es, wenn der Ort des Mobiltelefons kontinuierlich, d.h. nicht erst im Zusammenhang mit der Notfallmeldung anhand des Satellitenempfängers ermittelt und im Mobiltelefon, dem Satellitenempfänger oder der IC-Karte der Mobiltelefons oder sonstwo in geeigneter Weise neu gespeichert wird. Wird die Information über den Ort dabei kontinuierlich überschrieben, so bedarf es hierzu nur einer geringen Speicherkapazität. Ferner ist hieran vorteilhaft, daß auch dann, wenn sich die Person mit dem Mobiltelefon an einen in bezug auf das Satellitensignal ungünstigen Empfangsort begibt, stets eine in etwa präzise Information über den Aufenthaltsort der Person bei einem Notfall zur Verfügung steht. Ferner kann eine in Abhängigkeit von der Stärke der Satellitenempfangssignale betätigte Überschreib-Sperreinrichtung vorgesehen sein, die ein Überschreiben alter zuverlässig ermittelter Ortsdaten unterbleibt. Ggf. kann vorgesehen werden diese eventuell unzuverlässigen Werte in einem separaten Speicher zu speichern. So stehen in einem Notfall stets zuverlässige, wenn auch ältere Ortsdaten, und eventuell unzuverlässige Ortsdaten zur Übertragung durch das Mobiltelefon zur Verfugung. Bei einer Übertragung solcher unzuverlässiger Daten ist es i.d.R. zweckmäßig diesen eine dies kennzeichnende Kennung beizufügen, um die empfangende Station nicht zu verwirren.

Ferner kann es sinnvoll sein, wenn in dem Mobiltelefon ein Bewegungssensor 2e angeordnet wird, der dafür sorgt, daß die Ortsdaten nur dann erneut erfaßt und/oder gespeichert werden, wenn das Mobiltelefon bewegt wird oder die Aussendung einer Notfallmeldung veranlaßt wird. Ferner kann auch vorgesehen werden, daß der Satellitenempfänger ausgeschaltet wird bzw. in einer stromsparenden Schlummerschaltung verweilt bis das Mobiltelefon bewegt, in Betrieb genommen oder die Aussendung einer Notfallmeldung veranlaßt wird. Dadurch ist es möglich den Stromverbrauch der Anordnung im Ruhezustand auf ein Minimum zu reduzieren.

Ebenso kann es zweckmäßig sein, wenn die letzten Ortsdaten nur dann überschrieben werden, wenn die neu ermittelten Ortsdaten mit ausreichender Zuverlässigkeit ermittelt werden konnten.

Zudem können mehrere Sätze von nacheinander ermittelten Ortsdaten gespeichert werden, die der Reihe nach, beginnend mit den ältesten Ortsdaten, durch neue Ortsdaten - nach Art eines Schieberegisters - überschrieben werden.

Das Verarbeitungsergebnis der Datenverarbeitungsanlage 5 wird zweckmäßigerweise an das der Person nächstgelegene Rettungsfahrzeug 9 per Funk bzw. über ein Mobiltelefon übertragen und mit einer Anzeigeeinrichtung 10 - etwa wie beim Rettungsdienst - zur Anzeige gebracht. Dabei kann der Notruf auch unmittelbar an das dem Unfallort nächstgelegene Fahrzeug oder Krankenhaus, ohne Zwischenschaltung einer Aufsichtsperson, weitergeleitet werden. Vorteilhaft ist es, wenn das Rettungsfahrzeug eine Navigationshilfe aufweist, die dem Fahrer anzeigt, wie er an den Notfallort gelangt. Bei der Navigationshilfe kann es sich auch um eine Einrichtung handeln, die die Information über den aktuellen Aufenthaltsort des Rettungsfahrzeugs anhand eines GPS-Satellitenempfängers gewinnt.

Die Auswahl des der Person nächstgelegenen Rettungsfahrzeugs 9 aus einer Vielzahl weiterer Rettungsfahrzeuge 11, 12 kann erfolgen, indem die Rettungsfahrzeuge kontinuierlich ihren aktuellen Standort und Bereitschaftszustand an den Rettungsdienst übermitteln, wobei der GPS-Satellitenempfänger die Information über den Ort des Rettungsfahrzeugs zur Verfügung stellt.

Es versteht sich, daß das vorgenannte Mobiltelefon mit GPS-Empfänger auch von einem Beschädigungs-, Verzögerungs- oder sonstigen geeigneten Sensor, wie insbesondere einem Sensor, der die Betätigung des Airbags registriert oder veranlaßt, zur Aussendung einer Notfallmeldung veranlaßt werden kann, wenn es in einem Fahrzeug mit entsprechendem Sensor und elektrischer Verbindung betrieben wird.

Wird ein entsprechendes Mobiltelefon bzw. ein Funkgerät mit GPS-Empfänger von Wachpersonal mitgeführt, so kann es zweckmäßig, daß das Mobiltelefon bzw. das Funkgerät eine Notfallmeldung nach Ablauf einer vorbestimmten Zeit o.ä. ausstrahlt, wenn der Wachmann dies nicht verhindert und damit quittiert, daß alles in Ordnung ist.

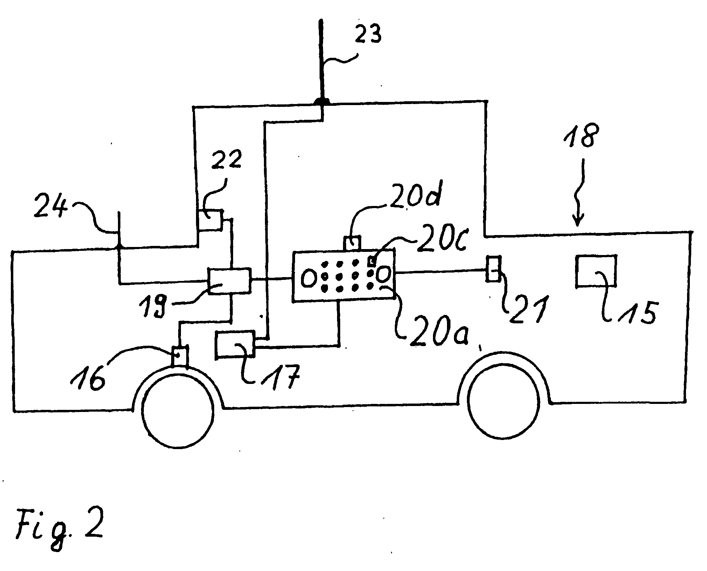

Figur 2 zeigt eine Anordnung gemäß der Erfindung in einem PKW 18. Eine Batterie 15 versorgt ein Mobiltelefon 20a, eine IC-Karte 20d20a, eine IC-Karte 20d, ein ABS-System (Anti-Blockier-System) 16, einen Mobilfunksender/empfänger 17 an einem bei einem Unfall wenig gefährdeten Ort, einen GPS-Satelliten-Empfänger 19, einen Airbag-Sensor 21 und einen Kompaß 22 über Verbindungsleitungen (nicht dargestellt) mit Spannung.

Während des Betriebs des Fahrzeugs 18 wird das von der Satellitenernpfangsantenne 24 empfangene Satellitensignal vom Satellitenernpfänger 19 verarbeitet und der Empfänger berechnet die aktuelle Position des Fahrzeugs (Ortsdaten). Insbesondere während eines Zeitraums zwischen dem Empfang eines neuen Ortssignals des bzw. der GPS-Satelliten können die richtungsanzeigenden Daten des Kompasses 22, die die Geschwindigkeit- und den Schlupf anzeigenden Daten des ABS-Systems 16 zur Berechnung des aktuellen Standorts des Fahrzeugs, z.B. durch eine entsprechende Datenverarbeitungseinrichtung im satellitenempfänger, herangezogen werden. Der entsprechend gestaltete Satellitenempfänger gibt dann kontinuierlich Ortsdaten ab, die in einem überschreibbaren Speicher der IC-Karte 20d fortlaufend gespeichert werden, wobei alte Ortsdaten - nach Art eines Schieberegisters mit mehreren Sätzen an Ortsdaten - durch neue ersetzt werden.

Ferner kann eine Überschreib-Sperreinrichtung vorgesehen werden, die ein Überschreiben alter Ortsdaten verhindert, wenn die berechnete neue Position sich von der berechneten vorherigen Position nicht unterscheidet, d.h. wenn das Fahrzeug stillsteht. Hieran ist vorteilhaft, daß ein Unfallhergang anhand der letzten Datensätze rekonstruiert werden kann. Zusätzlich kann die Überschreib-Sperreinrichtung derart gestattet sein, daß die unmittelbar vor dem durch einen Sensor - wie z.B. dem Sensor, der die Aktivierung des Airbags registriert oder veranlaßt - registrierten Unfall ermittelten Orts-, ABS- und/oder Kompaßdaten und die nachfolgenden entsprechenden Daten bis zum Zeitpunkt des Stillstands des Unfallfahrzeugs gegen Überschreiben geschützt sind. Ggf. können während dieses Zeitraums diese Daten in schnellerer Folge erhoben und falls nötig in einem zusätzlichen Speicher, z.B. in der IC-Karte, gespeichert werden.

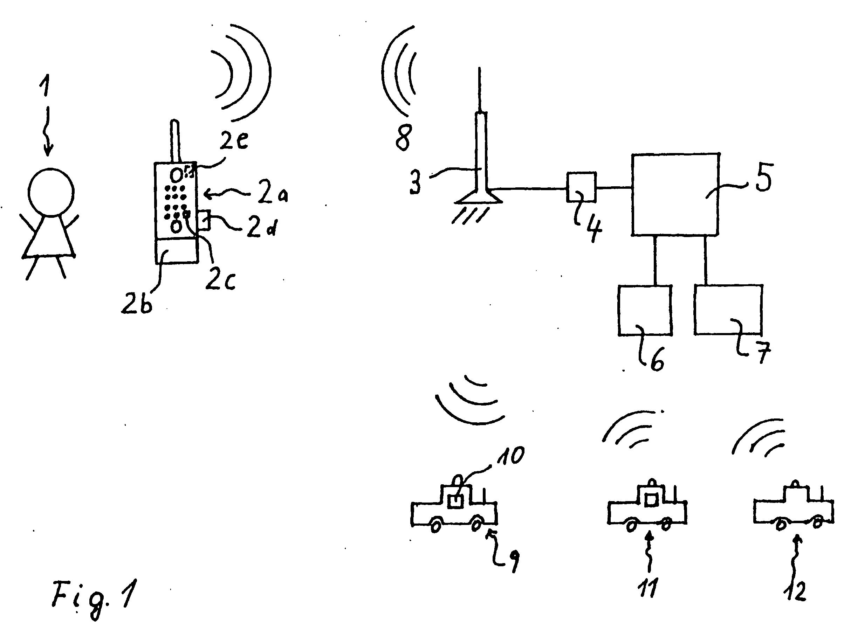

Registriert der Beschädigungs- oder Beschleunigungssensor 21, der z.B. zur Betätigung des Airbags oder Gurtstraffers vorgesehen sein kann, einen Unfall oder ähnliches, so veranlaßt er die Notruf-Auslöseeinrichtung, die sich z.B. im Mobiltelefon 20a befinden kann, zur Aussendung der in der IC-Karte oder anderenorts im Fahrzeug gespeicherten Orts- bzw. Positionsdaten des Fahrzeugs mittels des Mobiltelefons 20a und der Antenne 23. Ferner wird zumindest eine den Benutzer identifizierende Kennung, die in der IC-Karte abgespeichert ist, mit übertragen. Die ausgsandte. Notfalimeldung wird - wie in Figur 1 erläutert - verarbeitet und an einen Rettungsdienst, ein Rettungsfahrzeug oder einen Rettungshubschrauber - ggf. in modifizierter Form - weitergeleitet.

In der IC-Karte 20d oder anderenorts im System ist eine reversibel betätigbare Freischalteinrichtung vorgesehen, die sich im Zustand "Freigabe" befindet und so eine Übermittlung zumindest der Ortsdaten an die Rettungsfahrzeuge ermöglicht.

Zudem weist die IC-Karte eine Verschlüsselungseinrichtung zumindest für die Orts- und die den Benutzer kennzeichnende Information auf.

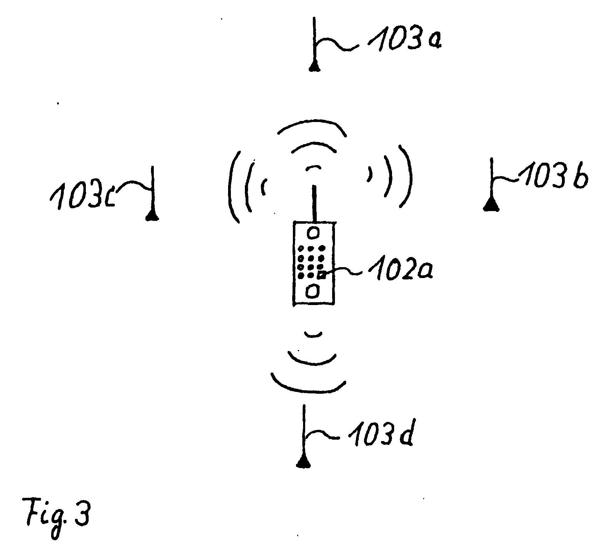

Figur 3 zeigt eine Anordnung gemäß der Erfindung bei der die Bestimmung des Orts des Mobiltelefons 102a durch eine Peilung, wie z.B eine Kreuzpeilung, durch Empfangsantennen 103 a-d eines Zelluar-Mobitfunk-Netzes erfolgt, was nicht Gegenstand des Ansprüche ist. Bei diesem Netz kann es sich bspw. um ein engmaschiges E-Netz handeln. Es versteht sich, daß auch weniger oder mehr Empfangsantennen zur Peilung verwendet werden können.

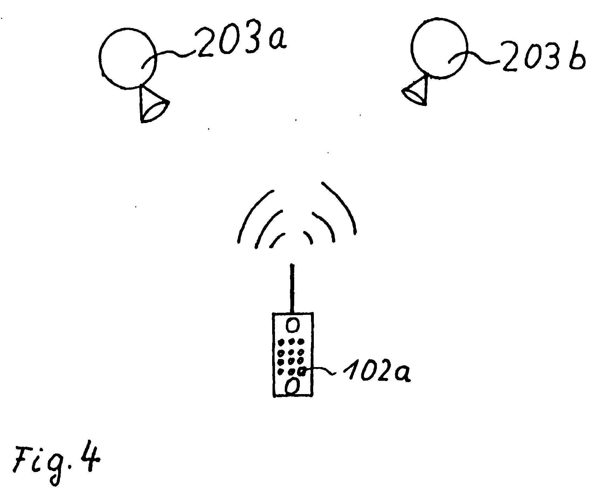

Figur 4 zeigt eine Anordnung gemäß Figur 3 bei der die Empfangsantennen an Satelliten 203a und 203b angeordnet sind und der Ort des Mobiltelefons 102a anhand einer Peilung oder anhand der Dopplermethode ermittelt wird, was nicht Gegenstand des Ansprüche ist. Es versteht sich, daß auch mehr oder weniger Satelliten bzw. Antennen benutzt werden können.

## Patentansprüche

1. System zum Herbeiholen von Hilfe für Personen (1) oder Insassen von Fahrzeugen (18)
- mit einem Mobiltelefon (2a) zum Betrieb in einem Mobilfunknetz,
- mit einer Betätigungseinrichtung,
bei deren Betätigung das Mobiltelefon eine Notfallnachricht aussendet, die von einer Mobilfunkbetriebseinrichtung empfangen und an einen Hilfs- oder Rettungsdienst weitergeleitet wird,
- mit einer Speichereinrichtung (2d), in der mindestens einige der im Notfall zu übertragenden Daten gespeichert werden,
wobei die an die Mobilfunkbetriebseinrichtung übertragenen Daten mindestens Ortsdaten und benutzerbezogene Daten aufweisen,
- mit einer Lokalisierungseinrichtung (2b), die den Ort des Mobiltelefons feststeltt und die Ortsdaten generiert,
***dadurch gekennzeichnet,***
- **dass** die Speichereinrichtung durch den Schaltkreis einer persönlichen IC-Karte (2d) eines Karteninhabers im Mobiltelefon gebildet ist,
deren Vorhandensein eine Zugangsvoraussetzung für die Benutzung des Systems zum Herbeiholen von Hilfe ist, und
in der eine dem Karteninhaber vom Betreiber des Mobilfunknetzes zugeordnete Identifikationsinformation gespeichert ist,
- wobei die benutzerbezogenen Daten mindestens diese Identifikationsinformation aufweisen.

2. System nach Anspruch 1, ***dadurch gekennzeichnet,* dass** eine Information über die Identität des Benutzers (1) des Mobiltelefons (2a) und/oder eine Information über die Kenndaten des Unfallfahrzeugs (18) an den Hilfs- oder Rettungsdienst übermittelt wird.

3. System nach Anspruch 1 oder 2, ***dadurch gekennzeichnet,* dass** das System eine Freischalteinrichtung, insbesondere im IC der IC-Karte (2d, 20d, 102d) des Mobiltelefons und/oder in einer Datenverarbeitungseinrichtung (5) der Mobilfunkbetriebseinrichtung, aufweist, die derart freischaltbar ist, dass die Ortsdaten ermittelt und/oder zur Benachrichtigung des Hilfs- oder Rettungsdienstes weitergeleitet werden.

4. System nach einem der Ansprüche 1 bis 3, ***dadurch gekennzeichnet,* dass** in der IC-Karte (2d) eine Bestätigung für das Aussenden und/oder den Empfang einer Notfallnachricht gespeichert wird.

5. System nach einem der Ansprüche 1 bis 4, ***dadurch gekennzeichnet,* dass** eine Telefonverbindung mit dem betreffenden Mobiltelefon (2a) bzw. Fahrzeug (18) hergestellt wird.

6. System nach einem der Ansprüche 1 bis 5, ***dadurch gekennzeichnet,* dass** in der IC-Karte (2d) eine oder mehrere Notrufnummem gespeichert sind.

7. System nach einem der Ansprüche 1 bis 6, ***dadurch gekennzeichnet,* dass** die IC-Karte (2d) eine Verschlüsselungseinrichtung zumindest für die Orts- und die den Karteninhaber kennzeichnende Information aufweist.

8. System nach einem der Ansprüche 1 bis 7, ***dadurch gekennzeichnet,* dass** die Ortsdaten kontinuierlich erfasst und in einer Speichereinrichtung (2d, 5, 20d) gespeichert werden, die insbesondere durch den integrierten Schaltkreis einer am Mobiltelefon angeordneten Chipkarte gebildet wird.

9. System nach einem der Ansprüche 1 bis 8, ***gekennzeichnet durch*** das Herbeirufen von Unfallhilfe, Pannenhilfe oder Hilfe zum Auffinden eines gestohlenen Fahrzeugs oder Mobiltelefons.

10. System nach einem der Ansprüche 1 bis 9, ***dadurch gekennzeichnet,* dass** eine Notfallmeldung nach einer. Datenverarbeitung an ein Rettungsfahrzeug mit einer Navigationshilfe weitergeleitet wird, die dem Fahrer anzeigt, wie er an den Notfallort gelangt, wobei die Navigationshilfe vorzugsweise eine Einrichtung ist, die die Information über den aktuellen Aufenthaltsort des Rettungsfahrzeugs anhand eines GPS-Satellitenempfängers gewinnt.

11. System nach einem der Ansprüche 1 bis 10, ***dadurch gekennzeichnet, dass*** die Lokalisierungseinrichtung einen Satellitenempfänger aufweist, der die Ortsdaten anzeigt bzw. entsprechende Daten zur Verfügung stellt, und der zur Kalibrierung bzw. Eichung Orts-, Zeit- oder Frequenzdaten der Satelliten des Global Positioning Systems bzw. GPS eines Zeit- und/oder Frequenznormals, einer Mobilfunkbetriebseinrichtung oder eines Systems zur Erhebung von Straßenbenutzungsgebühren empfängt, die diese zur Verarbeitung durch das erfindungsgemäße System aussenden.

12. System nach einem der Ansprüche 1 bis 10, ***dadurch gekennzeichnet, dass*** die Lokalisierungseinrichtung durch eine oder mehrere Mobilfunkbetriebseinrichtungen gebildet wird, die den Ort des Mobiltelefons anhand der ausgesandten Notfallnachricht ermitteln.

## Claims

1. System for summoning help for persons (1) or occupants of vehicles (18)
- having a mobile telephone (2a) for operation in a mobile radio network,
- having an activation device,
which when activated causes the mobile telephone to emit an emergency message which is received by a mobile radio operating device and forwarded to a help or rescue service,
- having a memory device (2d) in which at least some of the data items to be transmitted in an emergency are stored,
the data transmitted to the mobile radio operating device comprising at least local data and user-related data,
- having a locating device (2b) which detects the location of the mobile telephone and generates the location data,
**characterized in that**
- **in that** the memory device is formed in the mobile telephone by the circuit of a personal IC card (2d) of a card owner,
the presence of which is an access condition for the use of the system for summoning help, and
in which an identification information item which is assigned to the card owner by the operator of the mobile radio network is stored,
- the user-related data comprising at least this identification information.

2. System according to Claim 1, **characterized in that** an information item about the identity of the user (1) of the mobile telephone (2a) and/or an information item about the characteristic data of the vehicle (18) involved in the an accident is transmitted to the help service or rescue service.

3. System according to Claim 1 or 2, **characterized in that** the system has an enabling device, in particular in the IC of the IC card (2d, 20d, 102d) of the mobile telephone and/or in a data processing device (5) of the mobile radio operation device, which enabling device can be enabled in such a way that the local data is determined and/or is forwarded in order to inform the help service or rescue service.

4. System according to one of Claims 1 to 3, **characterized in that** a confirmation for the emission and/or the reception of an emergency message is stored in the IC card (2d).

5. System according to one of Claims 1 to 4, **characterized in that** a telephone connection is set up to the respective mobile telephone (2a) or vehicle (18).

6. System according to one of Claims 1 to 5, **characterized in that** one or more emergency call numbers are stored in the IC card (2d).

7. System according to one of Claims 1 to 6, **characterized in that** the IC card (2d) has an encryption device at least for the location information and for the information which characterizes the card owner.

8. System according to one of Claims 1 to 7, **characterized in that** the location data is collected continuously and stored in a memory device (2d, 5, 20d) which is formed, in particular, by the integrated circuit of a chip card which is arranged in the mobile telephone.

9. System according to one of Claims 1 to 8, **characterized by** the summoning of help in the event of an accident, breakdown help or help to find a stolen vehicle or mobile telephone.

10. System according to one of Claims 1 to 9, **characterized in that** an emergency message is forwarded, after data processing, to a rescue vehicle with a navigation aid which indicates to the driver how he reaches the location of the emergency, the navigation aid preferably being a device which acquires the information about the current location of the rescue vehicle by means of a GPS satellite receiver.

11. System according to one of Claims 1 to 10, **characterized in that** the locating device has a satellite receiver, which displays the location data or makes available appropriate data, and which for the purpose of standardizing or calibrating location, time or frequency data of the satellites of the Global Positioning System (GPS) receives a time and/or frequency standard of a mobile radio operating device or a system for collecting road tolls, which transmits these for processing by the system according to the invention.

12. System according to one of Claims 1 to 10, **characterized in that** the locating device is formed by one or more mobile radio operating devices, which determine the location of the mobile telephone with the aid of the emitted emergency message.

## Revendications

1. Système permettant de faire parvenir de l'aide à des personnes (1) ou à des occupants de véhicules (18)
- comprenant un téléphone mobile (2a) destiné à être utilisé dans un réseau de radiocommunication mobile,
- comprenant un dispositif de commande dont l'actionnement donne lieu à l'émission d'un message d'urgence par le téléphone mobile, lequel est reçu par un dispositif d'exploitation de radiocommunication mobile et retransmis à un service d'aide ou de sauvetage,
- comprenant un dispositif de mémorisation (2d) dans lequel sont enregistrées au moins quelques unes des données à transmettre en cas d'urgence, les données transmises au dispositif d'exploitation de radiocommunication mobile présentant au moins des données de localisation et des données en rapport avec l'utilisateur,
- comprenant un dispositif de localisation (2b) qui détermine l'emplacement du téléphone mobile et génère les données de localisation,
**caractérisé en ce**
- **que** le dispositif de mémorisation est formé par le circuit de commande d'une carte à puce personnelle (2d) d'un possesseur de carte dans le téléphone mobile dont la présence est une condition d'accès pour l'utilisation du système permettant de faire parvenir de l'aide et dans laquelle est enregistrée une information d'identification associée au possesseur de carte par l'opérateur du réseau de radiocommunication mobile, les données en rapport avec l'utilisateur présentant au moins cette information d'identification.

2. Système selon la revendication 1, **caractérisé en ce qu'**une information sur l'identité de l'utilisateur (1) du téléphone mobile (2a) et/ou une information sur les caractéristiques du véhicule accidenté (18) est transmise au service d'aide ou de sauvetage.

3. Système selon la revendication 1 ou 2, **caractérisé en ce que** le système présente un dispositif de déblocage, notamment dans la puce de la carte à puce (2d, 20d, 102d) du téléphone mobile et/ou dans le dispositif de traitement de données (5) du dispositif d'exploitation de radiocommunication mobile, lequel peut être débloqué de telle sorte que les données de localisation soient déterminées et/ou retransmises pour informer le service d'aide ou de sauvetage.

4. Système selon l'une des revendications 1 à 3, **caractérisé en ce qu'**une confirmation de l'émission et/ou de la réception d'un message d'urgence est enregistrée dans la carte à puce (2d).

5. Système selon l'une des revendications 1 à 4, **caractérisé en ce qu'**une liaison téléphonique est établie avec le téléphone mobile (2a) concerné ou avec le véhicule (18).

6. Système selon l'une des revendications 1 à 5, **caractérisé en ce qu'**un ou plusieurs numéros d'appel d'urgence sont enregistrés dans la carte à puce (2d).

7. Système selon l'une des revendications 1 à 6, **caractérisé en ce que** la carte à puce (2d) présente un dispositif de cryptage au moins pour l'information de localisation et pour l'information identifiant le possesseur de la carte.

8. Système selon l'une des revendications 1 à 7, **caractérisé en ce que** les données de localisation sont acquises continuellement et enregistrées dans un dispositif de mémorisation (2d, 5, 20d) qui est notamment formé par le circuit de commande intégré d'une carte à puce disposée sur le téléphone mobile.

9. Système selon l'une des revendications 1 à 8, **caractérisé par** l'appel d'un service de secours aux accidents, d'un service de dépannage ou d'un service de secours pour retrouver un véhicule ou un téléphone mobile volé.

10. Système selon l'une des revendications 1 à 9, **caractérisé en ce qu'**un message d'urgence, après un traitement des données, est retransmis à un véhicule de secours muni d'une aide à la navigation qui indique au conducteur la manière dont il peut parvenir sur le lieu de l'urgence, l'aide à la navigation étant de préférence un dispositif qui reçoit l'information sur le lieu où se trouve actuellement le véhicule de secours au moyen d'un récepteur de satellite GPS.

11. Système selon l'une des revendications 1 à 10, **caractérisé en ce que** le dispositif de localisation présente un récepteur satellite qui affiche les données de localisation ou fournit les données correspondantes et qui, pour le calibrage ou l'étalonnage reçoit des données de localisation, de temps ou de fréquence des satellites du système de positionnement global ou GPS de la part d'un étalon de temps et/ou de fréquence, d'un dispositif d'exploitation de radiocommunication mobile ou d'un système destiné à percevoir les taxes d'utilisation de la route, lequel émet celles-ci en vue de leur traitement par le système conforme à l'invention.

12. Système selon l'une des revendications 1 à 10, **caractérisé en ce que** le dispositif de localisation est formé par un ou plusieurs dispositifs d'exploitation de radiocommunication mobile qui déterminent l'emplacement du téléphone mobile au moyen du message d'urgence envoyé.
